# EUROPÄISCHE PATENTSCHRIFT

(11) **EP 0 628 790 B1**
(45) Veröffentlichungstag und Bekanntmachung des Hinweises auf die Patenterteilung: **12.08.1998**
(21) Anmeldenummer: 94107083.1
(22) Anmeldetag: 06.05.1994
(51) Int. Cl.: G01D 5/38

(54) **Vorrichtung zur Messung einer Bewegung zwischen zwei Teilen**
Device for measuring a movement between two parts
Dispositif pour mesurer le mouvement entre deux objets

(30) Priorität: 01.06.1993 DE 4318129
(43) Veröffentlichungstag der Anmeldung: 14.12.1994
(73) Patentinhaber: ROBERT BOSCH GMBH, 70442 Stuttgart (DE)
(72) Erfinder: Drabarek Pawel, Ing., D-71254 Ditzingen (DE)

(56) Entgegenhaltungen:
- EP-A- 0 509 979
- DE-C- 3 636 744
- GB-A- 2 241 780

## Beschreibung

### Stand der Technik

Die Erfindung betrifft eine Vorrichtung zur Messung einer Bewegung zwischen zwei Teilen wie sie beispielsweise aus der DE-OS 38 16 247 bekannt ist. Bei der bekannten Vorrichtung wird die von einer Strahlungsquelle emittierte Strahlung von einer optischen Meßstrecke in zwei Strahlungen aufgeteilt, die jeweils auf ein optisches Referenzgitter gerichtet sind. Das Referenzgitter beugt die beiden Strahlungen in Richtung unterschiedlicher Beugungsordnungen derart, daß die gebeugten Strahlungen einen gemeinsamen Auftreffort auf einem optischen Meßgitter aufweisen. Das Meßgitter beugt die Strahlungen erneut zum Interferieren in eine gemeinsame Richtung. Die interferierten Strahlungen treffen auf einen optischen Strahlungssensor, der ein elektrisches Signal mit einem bestimmten Pegel abgibt. Der Pegel hängt ab von einer relativen Bewegung, die zwischen dem Referenzgitter und dem Meßgitter auftritt. In einer Auswerteanordnung kann durch Vergleich des Pegels mit vorgegebenen absoluten Vergleichspegeln ein Maß für die relative Bewegung ermittelt werden.

In einem anderen Ausführungsbeispiel der bekannten Vorrichtung weisen die beiden ursprünglichen optischen Strahlungen eine Frequenzverschiebung gegeneinander auf. Der Strahlungssensor gibt ein Signal ab, das diese Differenzfrequenz enthält. Die Information über die relative Bewegung ist in der Phasenlage des elektrischen Signals enthalten. Die Auswerteanordnung ermittelt aus einem Phasenvergleich zwischen dem vom Strahlungsempfänger abgegebenen Signal und dem von einem Modulator abgegebenen Modulationssignal ein Maß für die relative Bewegung. Das vom Modulator abgegebene Signal ist einem akustooptischen Modulator zugeführt, der einen der beiden ursprünglichen Strahlungen moduliert, um eine Frequenzverschiebung zu erzeugen.

Bei der bekannten Vorrichtung sind in unterschiedlichen Ausführungsbeispielen anstelle eines Strahlungssensors mehrere Strahlungssensoren vorgesehen, denen jeweils Polarisationsfilter vorgeschaltet sind. In der optischen Strecke sind entsprechende Polarisatoren angeordnet, die eine Auswertung von unterschiedlichen Polarisationsrichtungen erst möglich machen. Durch Differenzbildung der von den Sensoren abgegebenen Signale ist eine einfache Auswertung von Maxima und Nulldurchgängen möglich. Beim Auftreten solcher Maxima oder Nulldurchgänge werden Zählimpulse erzeugt, deren Anzahl ein Maß für die Bewegung ist. Eine Pegelbewertung durch Vergleich der Signale unterschiedlicher Detektoren ist nicht vorgesehen.

Der Erfindung liegt die Aufgabe zugrunde, eine Vorrichtung zur Messung einer Bewegung zwischen zwei Teilen anzugeben, die eine einfache Auswertung des Pegels oder der Phasenlage eines von einem Strahlungssensor abgegebenen Signals ermöglicht.

Die Aufgabe wird durch die in den unabhängigen Ansprüchen angegebenen Merkmalen jeweils gelöst.

### Vorteile der Erfindung

Eine erste Ausführung der erfindungsgemäßen Vorrichtung weist den Vorteil auf, daß die Bewegung zweier Teile relativ zueinander aus einer Differenzmessung von absoluten Pegeln elektrischer Signale ermittelbar ist, die von zwei optischen Strahlungssensoren abgegeben werden. Störungseinflüsse auf die beiden vorgesehenen optischen Strecken wie beispielsweise Verschmutzung von optischen Komponenten oder beispielsweise mechanische Einflüsse, haben nur einen geringen Einfluß auf das Meßergebnis.

Erfindungsgemäß ist vorgesehen, daß eine erste Strahlung in eine jeweils in einer ersten und zweiten optischen Strecke liegende erste Meßstrahlung und eine zweite Strahlung in eine jeweils in der ersten und zweiten optischen Strecke liegende zweite Meßstrahlung aufgeteilt wird. Die Meßstrahlungen in beiden optischen Strecken werden jeweils auf ein optisches Referenzgitter geführt, das die beiden optischen Strahlungen in den beiden optischen Strecken jeweils auf gemeinsame Auftrefforte beugt, die auf einem optischen Meßgitter liegen. Das Meßgitter beugt die Strahlungen jeweils erneut in eine gemeinsame Richtung, so daß die beiden Strahlungen jeweils interferieren. Die interferierten Strahlungen treffen jeweils auf einen Strahlungssensor, der elektrische Signale abgibt. Die Richtung der beiden Meßstrahlungen in beiden optischen Strecken ist derart festzulegen, daß sämtliche Meßstrahlungen in Bewegungsrichtung zueinander versetzt sind. Wesentlich ist weiterhin, daß die beiden Meßstrahlungen in der einen optischen Strecke gegenüber der anderen optischen Strecke in bezug auf eine bestimmte Bewegungsrichtung vertauscht sind. Mit dieser Maßnahme wird erreicht, daß sich die von den beiden Strahlungssensoren abgegebenen Signale bei einer Bewegung gegenläufig ändern.

Eine andere Ausführung der erfindungsgemäßen Vorrichtung weist den Vorteil auf, daß die Bewegung aus einer Messung der Differenz der Phasenlagen der von den beiden Strahlungssensoren abgegebenen elektrischen Signale ermittelbar ist. Die Ermittlung einer Phasendifferenz ist ohne weiteres auch dann noch mit hoher Genauigkeit durchführbar, wenn eine Pegeländerung eines von einem Strahlungssensor abgegebenen elektrischen Signals auftritt. Der optische Aufbau mit den beiden optischen Strecken dieser Ausführung entspricht dem der ersten Ausführung. Eine Verlegung der Information vom Signalpegel in die Phasenlage des von den Strahlungssensoren abgegebenen elektrischen Signals ist durch eine Frequenzverschiebung der ersten gegenüber der zweiten optischen Strahlung möglich. Wesentlich ist auch hier, daß die beiden Meßstrahlungen in der einen optischen Strecke gegenüber denen der anderen optischen Strecke in bezug auf eine bestimmte Bewegungsrichtung vertauscht sind.

Vorteilhafte Weiterbildungen und Ausgestaltungen der erfindungsgemäßen Vorrichtung ergeben sich aus abhängigen Ansprüchen.

Die Aufteilung der ersten und zweiten optischen Strahlung sowie die Strahlenführung in den beiden optischen Strecken ist besonders einfach realisierbar, wenn das Meßgitter auf einer Kreisbahn angeordnet ist, die eine Drehbewegung gegenüber dem Referenzgitter ausführt, wobei die Auftrefforte der interferierten Strahlungen auf dem Meßgitter diametral gegenüberliegen. Die einfache Realisierung der Strahlteilung und Strahlumlenkung ist deshalb möglich, weil die Vertauschung der beiden Meßstrahlungen in der einen optischen Strecke gegenüber der anderen optischen Strecke in bezug auf eine bestimmte Bewegungsrichtung durch die Drehbewegung vereinfacht wird.

Eine vorteilhafte Ausgestaltung sieht vor, daß die Gitterkonstanten des Referenz- und des Meßgitters identisch sind. Diese Maßnahme ermöglicht eine einfache Strahlungsführung mit dem geringsten Strahlungsverlust, der bei der Strahlungsbeugung auftritt.

Eine vorteilhafte Weiterbildung sieht vor, daß als Strahlungsquelle ein Laser, vorzugsweise ein Halbleiterlaser eingesetzt wird. Insbesondere der Einsatz eines Halbleiterlasers ermöglicht die einfache Bereitstellung einer Frequenzverschiebung zwischen der ersten und der zweiten optischen Strahlung. Die Frequenzverschiebung ist mit einer Frequenzmodulation des Halbleiterlasers erreichbar, wobei zusätzlich im Verlauf der Strahlungsführung einer der beiden Strahlungen ein optischer Umweg vorgesehen ist, der zu einer Laufzeitverschiebung gegenüber der anderen Strahlung führt.

Weitere vorteilhafte Weiterbildungen und Ausgestaltungen ergeben sich aus weiteren abhängigen Ansprüchen in Verbindung mit der folgenden Beschreibung.

### Zeichnung

Figur 1 zeigt eine erste Ausgestaltung einer erfindungsgemäßen Vorrichtung zur Messung einer Bewegung zwischen zwei Teilen, die insbesondere für eine Messung einer linearen Bewegung geeignet ist, und
Figur 2 zeigt eine Ausgestaltung der erfindungsgemäßen Vorrichtung, die insbesondere zur Messung einer Drehbewegung geeignet ist.

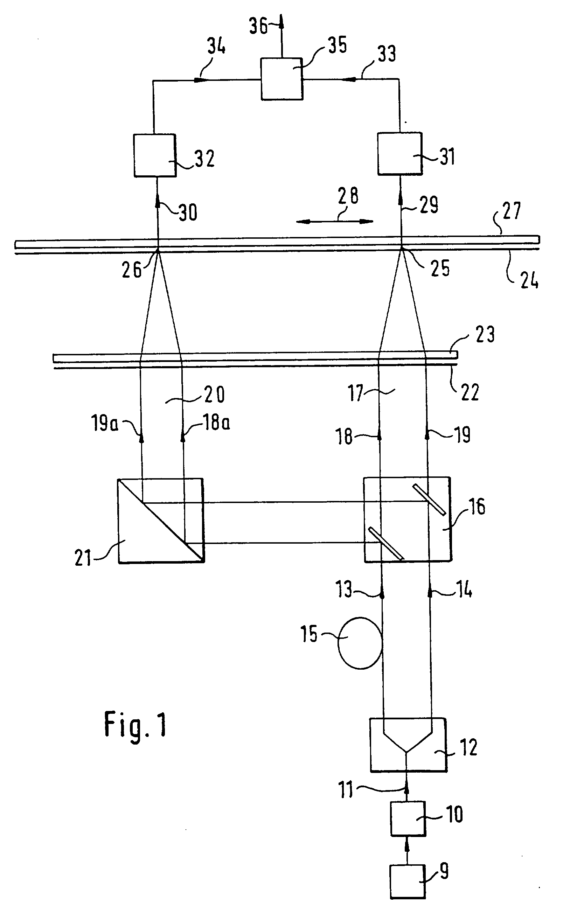

In Figur 1 ist eine Strahlungsquelle 10 mit einem Modulator 9 gezeigt, die eine Quellenstrahlung 11 an einen ersten Strahlteiler 12 abgibt. Der erste Strahlteiler 12 spaltet die Quellenstrahlung 11 in eine erste Strahlung 13 und in eine zweite Strahlung 14 auf. Im Verlauf der ersten Strahlung 13 ist ein optischer Umweg 15 angeordnet. Die beiden Strahlungen 13, 14 werden in einem zweiten Strahlteiler 16 in vier Meßstrahlungen aufgeteilt. In einer ersten optischen Strecke 17 liegen eine erste und zweite Meßstrahlung 18, 19. In einer zweiten optischen Strecke 20 liegen eine erste und zweite Meßstrahlung 18a, 19a. Die Meßstrahlungen 18a, 19a werden von einer Umlenkanordnung 21 bereitgestellt, die die vom zweiten Strahlteiler 16 kommenden Strahlungen umlenkt.

Die Meßstrahlungen 18, 19; 18a, 19a sind jeweils auf ein optisches Referenzgitter 22 gerichtet, das einem ersten Teil 23 zugeordnet ist. Das Referenzgitter 22 beugt die erste Meßstrahlung 18 und die zweite Meßstrahlung 19 in Richtung unterschiedlicher Beugungsordnungen derart, daß auf einem Meßgitter 24 ein gemeinsamer erster Auftreffort 25 entsteht. Das Referenzgitter 22 beugt ebenfalls die erste Meßstrahlung 18a und die zweite Meßstrahlung 19a in der zweiten optischen Strecke 20 in Richtung unterschiedlicher Beugungsordnungen derart, daß auf dem Meßgitter 24 ein zweiter gemeinsamer Auftreffort 26 entsteht. Das Meßgitter 24 ist einem zweiten Teil 27 zugeordnet.

Eine zu messende Bewegung in Bewegungsrichtung 28 tritt zwischen dem ersten Teil 23 und dem zweiten Teil 27 auf. Die erste und zweite Meßstrahlungen 18, 19 in der ersten optischen Strecke 17 einerseits und die erste und zweite Meßstrahlungen 18a, 19a in der zweiten optischen Strecke 20 andererseits sind in Bewegungsrichtung 28 jeweils gegeneinander versetzt. Die beiden Meßstrahlungen 18, 19 in der ersten Strecke 17 sind in bezug auf eine bestimmte Bewegungsrichtung 28 gegenüber den korrespondierenden Meßstrahlungen 18a, 19a in der zweiten optischen Strecke 20 vertauscht.

Das Meßgitter 24 beugt die in den Auftrefforten 25, 26 vorliegenden Meßstrahlungen 18, 19; 18a, 19a jeweils in eine gemeinsame Richtung. Die beiden Meßstrahlungen 18, 19 in der ersten optischen Strecke 17 werden vom Meßgitter 24 zur ersten interferierten Strahlung 29 und die beiden Meßstrahlungen 18a, 19a in der zweiten optischen Strecke 20 werden vom Meßgitter 24 zur zweiten interferierten Strahlung 30 zusammengeführt. Die interferierten Strahlungen 29, 30 gelangen auf optische Strahlungssensoren 31, 32, die elektrische Ausgangssignale 33, 34 an eine signalverarbeitende Anordnung 35 abgeben. Die Anordnung 35 stellt ein Meßergebnis 36 bereit, das ein Maß für die relative Bewegung zwischen den beiden Teilen 23, 27 ist.

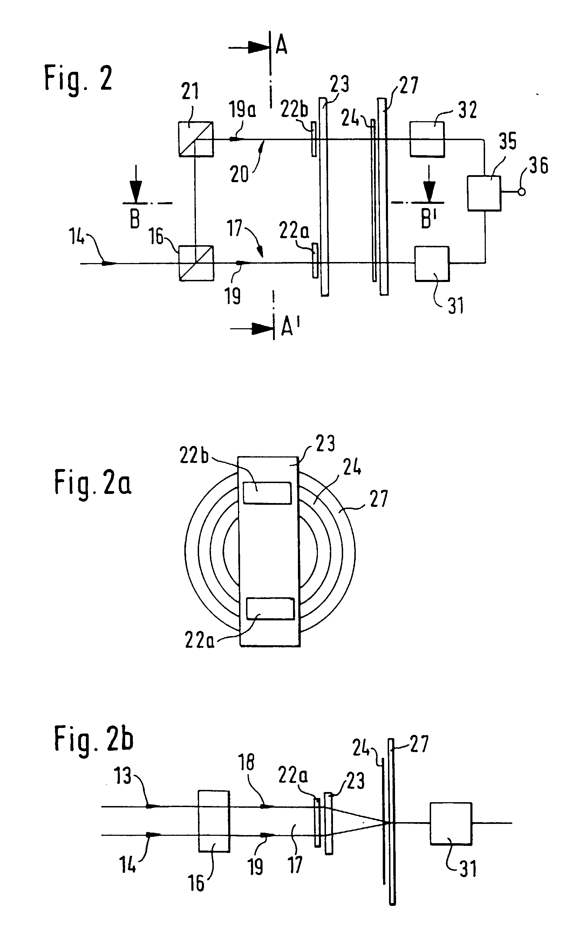

Figur 2 zeigt ein anderes Ausführungsbeispiel der erfindungsgemäßen Vorrichtung, wobei diejenigen Teile, die mit den in Figur 1 gezeigten Teilen übereinstimmen, jeweils dieselben Bezugszeichen tragen.

Die in Figur 2 gezeigte Vorrichtung ist besonders geeignet zur Messung einer Drehbewegung zwischen dem ersten und zweiten Teil 23, 27. Figur 2 a zeigt eine Draufsicht, bei der die erste Strahlung 13 sowie die daraus abgeleiteten ersten Meßstrahlungen 18, 18a in der ersten und zweiten optischen Strecke 17, 20 verdeckt sind. Anstelle des in Figur 1 dargestellten einteilig ausgeführten Referenzgitters 22 sind in Figur 2 zwei Teile 22a, 22b des Referenzgitters 22 vorgesehen.

Figur 2a zeigt die beiden die Gitter 22a, 22b, 24 tragenden Teile 23, 27 in einer Draufsicht, die von der Schnittlinie A - A' der Figur 2 ausgeht. Aus Figur 2a ist die Aufteilung des Referenzgitters 22 in die beiden Teilgitter 22a, 22b sowie die Ausgestaltung des Meßgitters 24 ersichtlich. Das Meßgitter 24 beschreibt eine Kreisbahn, wobei die Teilgitter 22a, 22b bezogen auf den Kreismittelpunkt diametral gegenüberliegen.

Figur 2b zeigt die Vorrichtung aus einer Sicht, die durch die Schnittlinie B - B' in Figur 2 gegeben ist. In Figur 2b sind die zweite Strahlung 14 sowie die daraus abgeleitete erste Meßstrahlung 19 zusätzlich zu sehen. Die Umlenkanordnung 21, die in der zweiten optischen Strecke 20 liegenden Meßstrahlungen 18a, 19a, das Teil 22b des Referenzgitters 22 sowie der Strahlungssensor 32 sind von anderen Teilen verdeckt und sind daher in Figur 2b nicht darstellbar.

Die in Figur 1 gezeigte erfindungsgemäße Vorrichtung arbeitet folgendermaßen:

Der erste Strahlteiler 12 teilt die von der Strahlungsquelle 10 abgegebene Quellenstrahlung 11 in die erste und zweite Strahlung 13, 14 auf. Die Strahlungsquelle 10 ist vorzugsweise eine Laserquelle. Insbesondere geeignet ist ein Halbleiterlaser, der neben dem Vorteil der kompakten Bauform den weiteren Vorteil mit sich bringt, daß die Frequenz der Quellenstrahlung 11 in einfacher Weise modulierbar ist. Zur Frequenzmodulation ist der Modulator 9 vorgesehen, der ein Signal mit einem vorgegebenen zeitlichen Verlauf abgibt. Geeignet ist beispielsweise ein sägezahnförmiger Verlauf. Die erfindungsgemäße Vorrichtung ist mit oder ohne Modulation betreibbar. Ohne Modulation hat der im Verlauf der ersten Strahlung 13 liegende optische Umweg 15 keine weitere Bedeutung. Der optische Umweg 15 verursacht ohne Modulation lediglich eine bekannte feste Phasenverschiebung zwischen der ersten und zweiten Strahlung 13, 14.

Zunächst wird davon ausgegangen, daß die Modulation der Strahlungsquelle 10 nicht vorgesehen ist. Der Strahlteiler 16 gibt die erste und zweite Strahlung 13, 14 in die erste optische Strecke 17 als erste und zweite Meßstrahlung 18, 19 ab. Der zweite Strahlteiler 16 koppelt von der ersten und zweiten Strahlung 13, 14 weiterhin die in der zweiten optischen Strecke 20 liegende erste und zweite Meßstrahlung 18a, 19a aus. Der zweite Strahlteiler 16 enthält zwei Ebenen, die eine örtlich versetzte Auskopplung der ersten und zweiten Meßstrahlung 18a, 19a ermöglichen. Der zweite Strahlteiler 16 koppelt die beiden Meßstrahlungen 18a, 19a in eine Richtung aus, die im wesentlichen senkrecht zur Richtung der ersten und zweiten Strahlung 13, 14 liegt. Die Umlenkanordnung 21, beispielsweise ein Spiegel, lenkt die erste und zweite Meßstrahlung 18a, 19a erneut im wesentlichen um 90° ab, so daß die erste optische Strecke 17 im wesentlichen parallel zur zweiten optischen Strecke 20 liegt.

Die erste und zweite Meßstrahlung 18, 19 in der ersten optischen Strecke 17 wird vom Referenzgitter 22 jeweils in bestimmte Richtungen gebeugt in denen die unterschiedlichen Beugungsordnungen auftreten. Der Abstand zwischen dem Referenzgitter 22 und dem Meßgitter 24 ist derart festzulegen, daß ein gemeinsamer erster Auftreffort 25 für die beiden gebeugten Meßstrahlungen 18, 19 entsteht. Die erste Meßstrahlung 18 wird in die +n.Ordnung und die zweite Meßstrahlung 19 in die -n.Ordnung gebeugt. Vorzugsweise ist n = 1. Das Meßgitter 24 beugt nochmals die erste und zweite Meßstrahlung 18, 19. Die Beugungsordnungen sind derart festgelegt, daß die Meßstrahlungen 18, 19 in eine gemeinsame Richtung gebeugt werden. Die Gitterkonstante des Meßgitters 24 ist auf die Gitterkonstante des Referenzgitters 22 abzustimmen. Vorzugsweise werden jeweils gleiche Gitterkonstanten vorgegeben. Die beiden in gemeinsame Richtung gebeugten Meßstrahlen 18, 19 interferieren und gelangen als erste interferierte Strahlung 29 auf den Strahlungssensor 31, der in Abhängigkeit von der Strahlungsintensität das elektrische Ausgangssignal 33 an die signalverarbeitende Anordnung 35 abgibt.

Der Verlauf der Strahlungen in der zweiten optischen Strecke 20 entspricht dem in der ersten optischen Strecke 17. Die von der Umlenkanordnung 21 auf das Referenzgitter 22 gerichteten Meßstrahlungen 18a, 19a werden vom Referenzgitter 22 in unterschiedliche Richtungen gebeugt, derart, daß am zweiten gemeinsamen Auftreffort 26 die beiden gebeugten Meßstrahlungen 18a, 19a zusammentreffen. Das Meßgitter 24 beugt nochmals die beiden Meßstrahlungen 18a, 19a; wieder in eine gemeinsame Richtung. Die beiden nochmals gebeugten Meßstrahlungen 18a, 19a interferieren und gelangen als zweite interferierte Strahlung 30 auf den Strahlungssensor 32, der in Abhängigkeit von der Intensität der zweiten interferierten Strahlung 30 das elektrische Ausgangssignal 34 an die signalverarbeitende Anordnung 35 abgibt.

Die signalverarbeitende Anordnung 35 wertet die Pegel der elektrischen Signale 33, 34 aus durch eine Differenzbildung. Der Pegel der elektrischen Signale 33, 34 hängt von einer Bewegung des Referenzgitters 22 in bezug auf das Meßgitter 24 ab. Das Referenzgitter 22 ist dem ersten Teil 23 zugeordnet, das beispielsweise eine feststehende Meßanordnung symbolisiert, gegenüber der das Meßgitter 24 bewegt wird, dem das zweite Teil 27 zugeordnet ist.

Bei dem in Figur 1 gezeigten Ausführungsbeispiel werden sowohl das Referenzgitter 22 als auch das Meßgitter 24 durchstrahlt. In einer anderen Ausgestaltung kann vorgesehen sein, daß das Meßgitter 24 die Meßstrahlungen 18, 19; 18a, 19a beugt und gleichzeitig reflektiert. Die Bewegung des Meßgitters 24 oder des Referenzgitters 23 in Bewegungsrichtung 28 ergibt jeweils Pegeländerungen der elektrischen Signale 33, 34, wobei die Zuordnung zum Betrag der Bewegung durch die Gitterkonstanten des Referenzgitters 23 und des Meßgitters 24 festgelegt ist. Die Pegeländerungen erfolgen kontinuierlich und wiederholen sich periodisch. Eine Bewegung um eine Gitterkonstante führt bereits zu einer Pegeländerung von zwei Perioden. Die Verdopplung der Auflösung ergibt sich dadurch, daß zwei Meßstrahlungen 18, 19 vorhanden sind, wobei die erste Meßstrahlung 18 in die eine und die zweite Meßstrahlung 19 in die entgegengesetzte Richtung gebeugt wird. Die Einbeziehung der zweiten optischen Strecke 20 führt dazu, daß die Auflösung nochmals verdoppelt wird. Aus einer Differenzbildung der Pegel der beiden elektrischen Signale 33, 34 ermittelt die signalverarbeitende Anordnung 35 den Betrag der Bewegung 28, der innerhalb einer einer Periode entsprechenden Bewegung stattgefunden hat. Durch Zählung der Perioden kann der absolute Meßbereich beliebig erhöht werden, wobei die hohe Auflösung nach wie vor gegeben ist.

Wesentlich für die Funktion der erfindungsgemäßen Vorrichtung ist es, daß die beiden Meßstrahlungen 18, 19 in der ersten optischen Strecke 17 in bezug auf eine bestimmte Bewegungsrichtung 28 gegenüber den beiden korrespondierenden Meßstrahlungen 18a, 19a in der zweiten optischen Strecke 20 vertauscht sind. Die Vertauschung erfolgt im gezeigten Ausführungsbeispiel mit den zwei Ebenen des zweiten Strahlteilers 16. In einem anderen, nicht gezeigten Ausführungsbeispiel kann der zweite Strahlteiler 16 ein normaler Teiler sein, wobei die Vertauschung mit der Umlenkanordnung 21 vorgenommen wird. Nur dann tritt eine auswertbare Differenz der Pegel der elektrischen Signale 33, 34 auf.

In einer anderen vorteilhaften Ausführung der erfindungsgemäßen Vorrichtung ist vorgesehen, daß die signalverarbeitende Anordnung 35 eine Phasendifferenz zwischen den beiden elektrischen Signalen 33, 34 ermittelt und weiter auswertet. Der wesentliche Vorteil bei der Auswertung von Phasenlagen liegt darin, daß die absoluten Pegel keinen Einfluß auf das Meßergebnis haben. Die erfindungsgemäße Vorrichtung arbeitet in dieser Ausführung als Heterodyn-Interferometer. Die Information über die Bewegung 28 steckt in der Phasenlage der elektrischen Signale 33, 34, wobei die Signale 33, 34 ein Wechselspannungssignal mit einer bekannten Frequenz sind, die beispielsweise im Bereich von 1 MHz bis 100 MHz liegen kann. Die Phasen der elektrischen Signale 33, 34 ändern sich gegenläufig. Eine Bewegung um eine Gitterkonstante hat deshalb bereits eine Phasenverschiebung von 4 x 360° zur Folge.

Zur Erzeugung der Heterodyn-Frequenz ist der Modulator 9 vorgesehen, der eine Frequenzmodulation der Quellenstrahlung 11 verursacht. In Verbindung mit dem entweder im Verlauf der ersten Strahlung 13 oder im Verlauf der zweiten Strahlung 14 angeordneten optischen Umweg 15 entsteht durch die zusätzliche Laufzeit eine Differenzfrequenz zwischen der ersten und zweiten Strahlung 13, 14, die der Heterodyn-Frequenz entspricht. Anstelle des Modulators 9 und des optischen Umwegs 15 ist ein akustooptischer Modulator verwendbar, der auf eine der beiden Strahlungen 13, 14 wirkt. Auch in dieser Ausführung der erfindungsgemäßen Vorrichtung ist die Vertauschung der Meßstrahlungen 18, 19 in bezug auf eine bestimmte Bewegungsrichtung 28 in der ersten optischen Strecke 17 gegenüber der zweiten optischen Strecke 20 wesentlich.

Die in Figur 1 gezeigte Vorrichtung ist insbesondere geeignet zum Messen einer linearen Bewegung zwischen dem ersten Teil 23 und dem zweiten Teil 27.

In Figur 2 ist ein Ausführungsbeispiel der erfindungsgemäßen Vorrichtung gezeigt, das insbesondere zur Messung einer Drehbewegung geeignet ist. Die grundsätzliche Funktionsweise entspricht der in Figur 1 gezeigten Vorrichtung. Ein erster Unterschied liegt in der Ausgestaltung der optischen Gitter 22, 24, wobei zumindest das Meßgitter 24 eine Kreisbahn beschreibt. Das Referenzgitter 22 braucht eine derartige Kreisbahn nicht zu beschreiben. Die in Figur 2a, dem Schnittbild A - A' gezeigte Ausführung mit zwei Teilgittern 22a, 22b, die gerade ausgeführt sein können, ist ausreichend. Das die Kreisbahn beschreibende Meßgitter 24 ist mit der Angabe einer Gitterkonstanten vollständig charakterisiert, wobei die exakte Position auf dem Meßgitter 24 zum Erhalt der genau vorgegebenen Gitterkonstante bei der Justierung der erfindungsgemäßen Vorrichtung experimentell erfolgen kann.

Ein anderer Unterschied liegt in der Strahlungsführung. Die in Figur 1 gezeigte erste und zweite Strahlung 13, 14 ist in bezug auf den Strahlteiler 16 um 90° in einer Ebene zu drehen, die senkrecht zur Zeichenebene der Figur 1 steht, um zu der in Figur 2 gezeigten Strahlungsführung zu gelangen. Der Strahlteiler 16 ist in diesem Ausführungsbeispiel ein herkömmlicher Teiler. Die Vertauschung der Meßstrahlungen 18a, 19a ist hier nicht erforderlich, weil die Reihenfolge durch die rotationssymmetrische Anordnung ohne zusätzliche Vertauschung richtig festgelegt ist. Der erste Strahlteiler 12, die Strahlungsquelle 10 sowie der gegebenenfalls vorhandene Modulator 9 in Verbindung mit dem optischen Umweg 15 sind in Figur 2 aus Übersichtlichkeitsgründen nicht eingetragen.

Die erfindungsgemäße Vorrichtung gemäß Figur 2 ermöglicht eine hoch aufgelöste Messung der Drehung, die zwischen dem Referenzgitter 22a, 22b, das dem ersten Teil 23 zugeordnet ist, und dem Meßgitter 24 auftritt, das dem zweiten Teil 27 zugeordnet ist. Vorausgesetzt, daß beide Gitter 22a, 22b; 24 dieselbe Gitterkonstante aufweisen, beträgt die Phasenverschiebung 4 x 360° bei einer Bewegung, die dem Betrag der Gitterkonstanten entspricht. Eine im Mikrometerbereich liegende Gitterkonstante ermöglicht somit eine Auflösung im Nanometerbereich.

Die Auswertung der von den Strahlungssensoren 31, 32 abgegebenen Signale 34, 35 ist besonders einfach möglich in der Ausgestaltung als Heterodyn-Interferometer, bei dem die Information über die Bewegung in der Phasenlage der elektrischen Signale 34, 35 liegt. Die Bewegung ist aus einer Phasendifferenzmessung ermittelbar. Die Phasenmessung ist unempfindlich gegenüber Amplitudenschwankungen, die beispielsweise durch eine unterschiedliche Verschmutzung, die in der ersten optischen Strecke 17 gegenüber der zweiten optischen Strecke 20 auftritt, verursacht ist.

## Patentansprüche

1. Vorrichtung zur Messung einer Bewegung zwischen zwei Teilen (23, 27), bei der in einer ersten optischen Strecke (17) eine erste und zweite Meßstrahlung (18, 19) auf ein dem ersten Teil (23) zugeordnetes optisches Referenzgitter (22, 22a, 22b) geführt sind, bei der das Referenzgitter (22, 22a, 22b) die beiden Meßstrahlungen (18, 19) auf einen gemeinsamen Auftreffort (25) beugt, der auf einem dem zweiten Teil (27) zugeordneten optischen Meßgitter (24) liegt, welches die beiden Meßstrahlungen (18, 19) nochmals zum Interferieren in eine gemeinsame Richtung beugt und bei der die interferierte Strahlung (30) auf einen Strahlungssensor (31) zugeleitet ist,
dadurch gekennzeichnet, daß ein Strahlteiler (16) eingesetzt ist, der die erste und zweite Strahlung (13, 14) teilt in die in der ersten optischen Strecke (17) liegende erste und zweite Meßstrahlung (18, 19) und in eine in einer zweiten optischen Strecke (20) liegende erste und zweite Meßstrahlung (18a, 19a) ;
daß beide Meßstrahlungen (18a, 19a) der zweiten optischen Strecke (20) ebenfalls auf das dem ersten Teil (23) zugeordnete Referenzgitter (22, 22a, 22b) geführt sind; daß das Referenzgitter (22, 22a, 22b) die beiden Meßstrahlungen (18a, 19a) der zweiten optischen Strecke (20) auf einen gemeinsamen Auftreffort (26) beugt, der auf dem optischen Meßgitter (24) liegt, das die beiden Meßstrahlungen (18a, 19a) der zweiten optischen Strecke (20) nochmals zum Interferieren in eine gemeinsame Richtung beugt; daß die interferierte Strahlung (30) in der zweiten optischen Strecke (20) einem Strahlungssensor (32) zugeleitet ist;
daß die beiden Meßstrahlungen (18, 19; 18a, 19a) in beiden optischen Strecken (17, 20) in Bewegungsrichtung (28) versetzt sind; daß die beiden Meßstrahlungen (18, 19; 18a, 19a) in der einen optischen Strecke (17) gegenüber der anderen optischen Strecke in Bezug auf eine bestimmte Bewegungsrichtung (28) vertauscht sind; und daß die Pegeldifferenz der beiden von den Strahlungssensoren (31, 32) abgegebenen elektrischen Signale (33, 34) zur Ermittlung der Bewegung ausgewertet wird.

2. Vorrichtung zum Messen einer Bewegung zwischen zwei Teilen (23, 27), bei der eine erste und zweite Strahlung (13, 14), die eine Frequenzdifferenz gegeneinander aufweisen, in einer ersten optischen Strecke (17) als erste und zweite Meßstrahlung (18, 19) auf ein dem ersten Teil (23) zugeordnetes optisches Referenzgitter (22, 22a, 22b) geführt sind, bei der das Referenzgitter (22, 22a, 22b) die erste und zweite Meßstrahlung (18, 19) auf einen gemeinsamen Auftreffort (25) beugt, der auf einem dem zweiten Teil (27) zugeordneten optischen Meßgitter (24) liegt, das die beiden Meßstrahlungen (18, 19) nochmals zum Interferieren in eine gemeinsame Richtung beugt und bei dem die interferierte Strahlung (29) einem Strahlungssensor (31) zugeleitet ist, dadurch gekennzeichnet, daß ein Strahlteiler (16) eingesetzt ist, der die erste und zweite Strahlung (13, 14) teilt in die in der ersten optischen Strecke (17) liegende erste und zweite Meßstrahlung (18, 19) und in eine in einer zweiten optischen Strecke (20) liegende erste und zweite Meßstrahlung (18a, 19a); daß die beiden Meßstrahlungen (18a, 19a) der zweiten optischen Strecke (20) auf das optische Referenzgitter (22, 22a, 22b) geführt sind; daß das Referenzgitter die beiden Meßstrahlungen (18a, 19a) der zweiten optischen Strecke (20) auf einen gemeinsamen Auftreffort (26) beugt, der auf dem optischen Meßgitter (24) liegt, das die beiden Meßstrahlungen (18a, 19a) der zweiten optischen Strecke (20) nochmals zum Interferieren in eine gemeinsame Richtung beugt; daß die interferierte Strahlung (30) einem Strahlungssensor (32) zugeleitet ist; daß die beiden Meßstrahlungen (18, 19; 18a, 19a) in beiden optischen Strecken (17, 20) in Bewegungsrichtung (28) versetzt sind; daß die beiden Meßstrahlungen (18, 19; 18a, 19a) in der einen optischen Strecke (17) gegenüber der anderen optischen Strecke (20) in Bezug auf eine bestimmte Bewegungsrichtung (28) vertauscht sind; und daß die Phasendifferenz der beiden von den Strahlungssensoren (31, 32) abgegebenen elektrischen Signale (33, 34) zur Ermittlung der Bewegung ausgewertet wird.

3. Vorrichtung nach Anspruch 1 oder 2, gekennzeichnet, durch die derartige Anordnung daß das dem zweiten Teil (27) zugeordnete Meßgitter (24) eine Kreisbahn beschreibt und daß das zweite Teil (27) gegenüber dem ersten Teil (23) eine Drehbewegung ausführt.

4. Vorrichtung nach Anspruch 3, dadurch gekennzeichnet, daß die Auftrefforte (25, 26) der zu interferierenden Meßstrahlungen (18, 19; 18a, 19a) auf dem Meßgitter (24) diametral gegenüberliegen.

5. Vorrichtung nach Anspruch 1 oder 2, dadurch gekennzeichnet, daß das Referenzgitter (22; 22a, 22b) und das Meßgitter (24) Lineargitter mit jeweils gleicher Gitterkonstanten sind.

6. Vorrichtung nach Anspruch 1, dadurch gekennzeichnet, daß als Strahlungsquelle (10) ein Laser, vorzugsweise ein Halbleiterlaser eingesetzt ist.

7. Vorrichtung nach Anspruch 2, dadurch gekennzeichnet, daß als Strahlungsquelle (10) ein Laser, vorzugsweise ein Halbleiterlaser eingesetzt ist; daß ein Modulator (9) zum Modulieren der Laserfrequenz, und daß ein im Verlauf der ersten oder der zweiten optischen Strahlung (13, 14) angeordneter optischer Umweg (15) zur Vorgabe einer Laufzeitdifferenz zwischen der ersten und zweiten optischen Strahlung (13, 14) vorhanden sind.

8. Vorrichtung nach Anspruch 2, dadurch gekennzeichnet, daß im Strahlengang der ersten oder der zweiten optischen Strahlung (13, 14) ein akustooptischer Modulator angeordnet ist.

## Claims

1. Device for measuring a movement between two parts (23, 27), in which in a first optical section (17) a first and second measuring beam (18, 19) are guided onto an optical reference grating (22, 22a, 22b) assigned to the first part (23), in which the reference grating (22, 22a, 22b) diffracts the two measuring beams (18, 19) onto a common impingement location (25) which is situated on an optical measuring grating (24) which is assigned to the second part (27) and in turn diffracts the two measuring beams (18, 19) into a common direction to cause interference, and in which the interfered radiation (29) is fed to a radiation sensor (31), characterized in that use is made of a beam splitter (16) which splits the first and second beams (13, 14) into the first and second measuring beams (18, 19) situated in the first optical section (17), and into a first and second measuring beam (18a, 19a) situated in a second optical section (20); in that both measuring beams (18a, 19a) of the second optical section (20) are likewise guided onto the reference grating (22, 22a, 22b) assigned to the first part (23); in that the reference grating (22, 22a, 22b) diffracts the two measuring beams (18a, 19a) of the second optical section (20) onto a common impingement location (26) which is situated on the optical measuring grating (24), which in turn diffracts the two measuring beams (18a, 19a) of the second optical section (20) into a common direction to cause interference; in that the interfered radiation (30) in the second optical section (20) is fed to a radiation sensor (32); in that the two measuring beams (18, 19; 18a, 19a) in the two optical sections (17, 20) are offset in the direction of movement (28); in that the two measuring beams (18, 19; 18a, 19a) in one optical section (17) are interchanged by contrast with the other optical section with reference to a specific direction of movement (28); and in that the difference in level between the two electric signals (33, 34) output by the radiation sensors (31, 32) is evaluated to determine the movement.

2. Device for measuring a movement between two parts (23, 27), in which a first and second beam (13, 14), which have a mutual frequency difference, are guided in a first optical section (17) as first and second measuring beams (18, 19) onto an optical reference grating (22, 22a, 22b) assigned to the first part (23), in which the reference grating (22, 22a, 22b) diffracts the first and second measuring beams (18, 19) onto a common impingement location (25) which is situated on an optical measuring grating (24) which is assigned to the second part (27) and in turn diffracts the two measuring beams (18, 19) into a common direction to cause interference, and in which the interfered radiation (29) is fed to a radiation sensor (31), characterized in that use is made of a beam splitter (16) which splits the first and second beams (13, 14) into the first and second measuring beams (18, 19) situated in the first optical section (17), and into a first and second measuring beam (18a, 19a) situated in a second optical section (20); in that the two measuring beams (18a, 19a) of the second optical section (20) are guided onto the optical reference grating (22, 22a, 22b); in that the reference grating diffracts the two measuring beams (18a, 19a) of the second optical section (20) onto a common impingement location (26) which is situated on the optical measuring grating (24), which in turn diffracts the two measuring beams (18a, 19a) of the second optical section (20) into a common direction to cause interference; is fed in that the interfered radiation (30) is fed to a radiation sensor (32); in that the two measuring beams (18, 19; 18a, 19a) in the two optical sections (17, 20) are offset in the direction of movement (28); in that the two measuring beams (18, 19; 18a, 19a) in one optical section (17) are interchanged by contrast with the other optical section (20) with reference to a specific direction of movement (28); and in that the phase difference between the electric signals (33, 34) output by the radiation sensors (31, 32) is evaluated to determine the movement.

3. Device according to Claim 1 or 2, characterized by the arrangement such that the measuring grating (24) assigned to the second part (27) describes a circular track, and that the second part (27) executes a rotary movement with respect to the first part (23).

4. Device according to Claim 3, characterized in that the impingement locations (25, 26) of the measuring beams (18, 19; 18a, 19a) to be caused to interfere are diametrically opposite on the measuring grating (24).

5. Device according to Claim 1 or 2, characterized in that the reference grating (22; 22a, 22b) and the measuring grating (24) are linear gratings each having the same grating constant.

6. Device according to Claim 1, characterized in that a laser, preferably a semiconductor laser, is used as radiation source (10).

7. Device according to Claim 2, characterized in that a laser, preferably a semiconductor laser, is used as radiation source (10); in that a modulator (9) for modulating the laser frequency is present, and in that an optical detour (15) arranged in the course of the first or the second optical beam (13, 14) is present to prescribe a propagation time difference between the first and second optical beams (13, 14).

8. Device according to Claim 2, characterized in that an acousto-optical modulator is arranged in the beam path of the first or the second optical beam (13, 14).

## Revendications

1. Dispositif pour mesurer le mouvement entre deux pièces (23, 27) selon lequel, dans un premier chemin optique (17), un premier et un second faisceau de mesure (18, 19) sont conduits sur un premier réseau optique de référence (22, 22a, 22b) associé à la première pièce (23), ce réseau de référence (22, 22a, 22b) diffractant les deux faisceaux de mesure (18, 19) sur un point d'impact commun (25) situé sur le réseau de mesure optique (24) associé à la seconde pièce (27), ce second réseau diffractant de nouveau les deux faisceaux de mesure (18, 19), dans la même direction pour les faire interférer, et le faisceau d'interférence (30) étant conduit sur un capteur de faisceau (31),
caractérisé en ce qu'
il comporte un diviseur de faisceau (16) qui divise le premier et le second faisceau (13, 14) en un premier et un second faisceau de mesure (18, 19) situés dans le premier chemin optique (17), et un premier et second faisceau de mesure (18a, 19a) situés dans un second chemin optique (20),
- les deux faisceaux de mesure (18a, 19a) du second chemin optique (20) étant également conduits vers le réseau de référence (22, 22a, 22b) associé à la première pièce (23),
- le faisceau de référence (22, 22a, 22b) diffractant les deux faisceaux de mesure (18a, 19a) du second chemin optique (20) sur un point d'impact (26) commun situé sur le réseau de mesure optique (24) qui diffracte de nouveau les deux faisceaux de mesure (18a, 19a) du second chemin optique (20), pour le faire interférer dans une direction commune,
- le faisceau d'interférence (30) du second chemin optique (20) étant conduit sur un capteur de faisceau (32),
- les deux faisceaux de mesure (18, 19 ; 18a, 19a) des deux chemins optiques (17, 20) étant décalés dans la direction de mouvement (28),
- les deux faisceaux de mesure (18, 19 ; 18a, 19a) dans un chemin optique (17) étant échangés par rapport à ceux de l'autre chemin optique, vis-à-vis d'une certaine direction de mouvement (28), et
- la différence de niveau des signaux électriques (33, 34) fournis par les deux capteurs de faisceau (31, 32) étant exploitée pour déterminer le mouvement.

2. Dispositif pour mesurer un mouvement entre deux pièces (23, 27) selon lequel,
un premier et un second faisceau (13, 14) ayant entre eux une différence de fréquence, sont conduits sur un premier chemin optique (17) comme premier et second faisceaux de mesure (18, 19) sur un premier réseau optique de référence (22, 22a, 22b) associé à la première pièce (23) et le réseau de référence (22, 22a, 2b) diffracte le premier et le second faisceau de mesure (18, 19) vers un point d'impact commun (25) situé sur le réseau optique de mesure (24) associé à la seconde pièce (27) qui diffracte de nouveau les deux faisceaux de mesure (18, 19) pour les faire interférer dans une direction commune, et le faisceau d'interférence (29) est fourni à un capteur de faisceau (31),
caractérisé en ce qu'
il est prévu un diviseur de faisceau (16) qui divise le premier et le second faisceau (13, 14) en un premier et second faisceau de mesure (18, 19) situés dans le premier chemin optique de mesure (17), et en un premier et second faisceau de mesure (18a, 19a) situés dans un second chemin optique (20),
- les deux faisceaux de mesure (18a, 19a) du second chemin optique (20) étant conduits sur le réseau optique de référence (22, 22a, 22b),
- le réseau de référence diffracte les deux faisceaux de mesure (18a, 19a) du second chemin optique (20) vers un point d'impact commun (26) situé sur le réseau de mesure optique (24), celui-ci diffractant les deux faisceaux de mesure (18a, 19a) du second chemin optique (20) une nouvelle fois pour les faire interférer dans une direction commune,
- le faisceau d'interférence (30) étant conduit sur un capteur de faisceau (32),
- les deux faisceaux de mesure (18, 19 ; 18a, 19a) dans les deux chemins optiques (17, 20) étant décalés dans la direction de déplacement (28),
- les deux faisceaux de mesure (18, 19 ; 18a, 19a) étant échangés dans l'un des chemins optiques (17) par rapport à l'autre chemin optique (20), pour une certaine direction de mouvement (28), et
- la différence de phase des signaux électriques (33, 34) fournis par les capteurs de faisceau (31, 32), étant exploitée pour déterminer le mouvement.

3. Dispositif selon la revendication 1 ou 2,
caractérisé par
une disposition telle que le réseau de mesure (24) associé à la seconde pièce (27) décrive une trajectoire circulaire et que la seconde pièce (27) effectue un mouvement de rotation par rapport à la première pièce (23).

4. Dispositif selon la revendication 3,
caractérisé en ce que
les points d'impact (25, 26) des faisceaux de mesure (18, 19 ; 18a, 19a) qui doivent interférer, sont diamétralement opposés sur le réseau de mesure (24).

5. Dispositif selon la revendication 1 ou 2,
caractérisé en ce que
le réseau de référence (22, 22a, 22b) et le réseau de mesure (24) sont des réseaux linéaires ayant chaque fois les mêmes constantes de réseau.

6. Dispositif selon la revendication 1,
caractérisé en ce que
la source de faisceau (10) est un laser de préférence un laser à semi-conducteur.

7. Dispositif selon la revendication 2,
caractérisé en ce que
la source de faisceau (10) est un laser, de préférence un laser à semi-conducteur, un modulateur (9) pour moduler la fréquence laser et un détour optique (15) pour définir une différence de temps de parcours entre le premier et le second faisceau optique (13, 14), étant prévus dans le tracé du premier ou du second faisceau optique (13, 14).

8. Dispositif selon la revendication 2,
caractérisé par
un modulateur acoustique-optique dans le premier ou le second faisceau optique (13, 14).
